# EUROPÄISCHE PATENTSCHRIFT

(11) **EP 2 582 531 B1**
(45) Veröffentlichungstag und Bekanntmachung des Hinweises auf die Patenterteilung: **14.01.2015**
(21) Anmeldenummer: 11717618.0
(22) Anmeldetag: 02.05.2011
(51) Int. Cl.: B60C 19/08

(54) **FAHRZEUGLUFTREIFEN MIT LUFTABFÜHRUNGSFÄDEN UND VERFAHREN ZUR HERSTELLUNG EINER ELEKTRISCH LEITFÄHIGEN BESCHICHTUNG FÜR DIE LUFTABFÜHRUNGSFÄDEN**
PNEUMATIC TIRE WITH VENTING FILAMENTS AND METHOD FOR MANUFACTURING AN ELECTRICALLY CONDUCTIVE COATING FOR THE VENTING FILAMENTS
PNEUMATIQUE DE VÉHICULE MUNI DE FILS D'ÉVACUATION D'AIR ET PROCÉDÉ DE FABRICATION D'UN REVÊTEMENT ÉLECTROCONDUCTEUR POUR LES FILS D'ÉVACUATION D'AIR

(30) Priorität: 18.06.2010 DE 102010017444
(43) Veröffentlichungstag der Anmeldung: 24.04.2013
(73) Patentinhaber: Continental Reifen Deutschland GmbH, 30165 Hannover (DE)
(72) Erfinder: SCHUNACK, Michael, 30171 Hannover (DE); SONNENBERG, Lars, 30167 Hannover (DE); WAHL, Günter, 31249 Hohenhameln-Clauen (DE); JUSTINE, Carole, 31535 Scharrel (DE); FIDAN, Mehmet Sadettin, 30827 Garbsen (DE); KENDZIORRA, Norbert, 30827 Garbsen (DE); WEBER, Christian, 30826 Garbsen (DE)
(74) Vertreter: Finger, Karsten
(86) Internationale Anmeldenummer: PCT/EP2011/056918
(87) Internationale Veröffentlichungsnummer: WO 2011/157473

(56) Entgegenhaltungen:
- EP-A1- 2 193 939
- EP-A1- 2 233 323
- DE-A1- 2 362 902

## Beschreibung

Die Erfindung betrifft einen Fahrzeugluftreifen in Radialbauart mit einer Karkasse und mit an die Karkasse angrenzenden Bauteilen, wobei auf zumindest einer der beiden Oberflächen der Karkasse fadenförmige Elemente angeordnet sind, die vorzugsweise während des Reifenaufbaus einer Luftabführung von eingeschlossener Luft zwischen der Karkasse und den angrenzenden Bauteilen dienen. Die Erfindung betrifft ebenfalls ein Verfahren zur Herstellung einer elektrisch leitfähigen Beschichtung für die fadenförmigen Elemente.

Ein derartiger Reifen ist aus der EP 2 193 939 A1 bekannt geworden, wo alle Merkmale des Oberbegriffs von Anspruch 1 offenbart sind.
Radialreifen mit fadenförmigen Elementen zur Luftabführung (sog. Luftabführungsfäden) sind dem Fachmann hinreichend bekannt. Ein derartiger Fahrzeugluftreifen ist beispielsweise aus der DE 3014 268 A1 bekannt. Radialreifen zeichnen sich durch einen radialen Verlauf der Karkassfestigkeitsträger aus. Die Karkasse wird in einem Textilkalander hergestellt, indem die Einlage mit einer Mischungsschicht aus Kautschuk umzogen wird.

Um beim Reifenbau zu verhindern, dass Luft zwischen aneinandergefügten Bauteilen eingeschlossen und somit die Qualität des Reifens gemindert wird, wird das Bauteil Karkasse nach seiner Herstellung in dem Textilkalander auf der Oberfläche der Mischungsschicht mit fadenförmigen, parallel zueinander angeordneten Elementen zur Luftabführung belegt. Diese Belegung kann einseitig, also nur auf einer der beiden Oberflächen der Karkasse, oder beidseitig auf beiden Oberflächen der Karkasse erfolgen. Die Belegung mit den fadenförmigen luftabführenden Elementen, welche nicht/ nicht ausreichend elektrisch leitfähig sind, erfolgt üblicherweise in einem Abstand von 25 bis 40mm. Die luftabführenden Elemente sind beispielsweise Baumwollfäden mit einem Durchmesser von 0,05 - 1mm. Im Reifen verlaufen die fadenförmigen Elemente zur Luftabführung in radialer Richtung und überspannen die volle Karkasslagenbreite.

Um die im Betrieb des Reifens auftretende elektrostatische Aufladung ableiten zu können, sind der mit der Fahrbahnoberfläche in Kontakt tretende Kopfbereich samt Laufstreifen, der mit der Reifenfelge in Kontakt tretende Wulstbereich und wenigstens ein Bauteil, wie Innenschicht, Karkasse oder Seitenwand, welche den Laufstreifen und den Wulstbereich miteinander verbindet, elektrisch leitfähig gestaltet. Dieses kann beispielsweise durch die Verwendung elektrisch leitfähiger Kautschukmischungen erfolgen. Elektrisch leitfähig bedeutet, dass der Reifen einen elektrischen Widerstand von höchstens 1 x 10⁸ Ohm aufweist.

Nun geht die Entwicklung dahin, den Rollwiderstand des Reifens zu reduzieren. Ein Ansatz, den Rollwiderstand zu reduzieren, ist der Einsatz rollwiderstandsarmer Mischungen. Diese werden bevorzugt als sogenannte "Body-Mischungen" im Seitenwandbereich, für die Innenschicht und die Karkasse eingesetzt. Die Hysterese dieser rollwiderstandsarmen Mischungen lässt sich vor allem durch den Einsatz niedrig aktiver Füllstoffe, geringerer Mengen an Füllstoff oder durch den Austausch von Ruß durch Silika verringern. Der Einsatz dieser rollwiderstandsarmen Mischungen führt jedoch zu einer Erhöhung des elektrischen Widerstandes dieser Mischungen, so dass die elektrische Leitfähigkeit sinkt. Der geforderte elektrische Widerstand des Gesamtreifens von 1 x 10⁸ Ohm zur Ableitung der elektrostatischen Aufladung kann nicht sichergestellt werden.

Oftmals werden zur Abhilfe sogenannte leitfähige Ruße in geringsten Konzentrationen in den o.g. Bauteilen verwendet. Diese haben allerdings eine sehr hohe verstärkende/versteifende Wirkung und wirken sich auch negativ auf das Hystereseverhalten und somit den Rollwiderstand aus. Um eine geforderte geringe Steifigkeit einer Mischung, z.B. im Seitenwandbereich, nicht zu überschreiten, muss als Kompensation für die leitfähigen Ruße der Füllgrad mit sonstigen verstärkenden Füllstoffen weit reduziert werden. Dies kann in weichen Bauteilen wie der Seitenwand dazu führen, dass der Gesamtfüllgrad sehr niedrig wird. Als Folge ist eine Dispersion der hochoberflächigen Leitfähigkeitsruße nicht mehr zufriedenstellend möglich mit den Nachteilen wie beispielsweise zu geringe Festigkeit oder Abriebsfestigkeit. Zudem ist eine solche Maßnahme basierend auf leitfähigen Rußen teuer.

Der Erfindung liegt die Aufgabe zugrunde, einen kostengünstigen, qualitativ hochwertigen Fahrzeugluftreifen bereitzustellen, der mit einfachen Maßnahmen eine verbesserte elektrische Leitfähigkeit aufweist.

Gelöst wird die Aufgabe gemäß dem Oberbegriff und den kennzeichnenden Merkmalen von Anspruch 1 dadurch, dass das fadenförmige Element nicht elektrisch leitfähig ist, dass wenigstens eines dieser fadenförmigen, vorzugsweise luftabführenden Elemente eine Beschichtung aufweist, die elektrisch leitfähig ist, so dass das fadenförmige, vorzugsweise luftabführende Element und die Beschichtung gemeinsam ein elektrisch leitfähiges, fadenförmiges Element bilden und dass das elektrisch leitfähige, fadenförmige Element einen elektrischen Widerstand von < 1 x 10⁷ Ohm/cm aufweist.

Erfindungswesentlich ist, dass durch die einfache Maßnahme des Aufbringens einer elektrisch leitfähigen Beschichtung um wenigstens ein fadenförmiges, vorzugsweise luftabführendes Element (vorzugsweise dem sog. Luftabführungsfaden) die elektrische Leitfähigkeit des Fahrzeugluftreifens verbesserbar ist. Das fadenförmige Element als solches ist in seinen physikalischen Eigenschaften nicht verändert, sondern weist lediglich eine Beschichtung auf, die elektrisch leitfähig ist. Überraschenderweise hat es sich gezeigt, dass eine Beschichtung von fadenförmigen Elementen, vorzugsweise von Luftabführungsfäden, vollkommen ausreicht, um die erwünschte und geforderte elektrische Leitfähigkeit des Reifens mit einem maximalen Gesamtwiderstand von 1 x 10⁸ Ohm zu erhalten.

Das fadenförmige Element kann ein Luftabführungsfaden oder ein sonstiges, nicht luftabführendes, fadenförmiges Element sein, welches im Austausch oder ergänzend auf der Oberfläche der Karkasse angeordnet ist.

Es ist sichergestellt, dass die Ableitung der elektrostatischen Aufladung von der Felge über den Wulst über die elektrisch leitenden Elemente bis zum elektrisch leitenden Kopfbereich verbessert ist, auch wenn keine der den Seitenbereich des Reifens überbrückenden Kautschukmischungen eine ausreichende elektrische Leitfähigkeit aufweist.
Wenn die fadenförmigen Elemente Luftabführungsfäden sind, ist der Fahrzeugluftreifen dennoch von hoher Fertigungsqualität, da die während des Reifenbaus zwischen den Bauteilen eingeschlossene Luft weiterhin durch die verbleibenden Luftabführungsfäden zuverlässig abführbar ist. Mit dieser einfachen und kostengünstigen Maßnahme ist die elektrische Leitfähigkeit des Fahrzeugluftreifens verbessert. Es muss keine aufwendige konstruktive Maßnahme am Reifen erfolgen, wie beispielsweise das Auflegen von zusätzlichen, elektrisch leitfähigen Gummisteifen.

Das nicht elektrisch leitfähige fadenförmige Element weist einen Widerstand > 1 x 10⁷ Ohm auf.

Der Begriff "Beschichtung" meint eine Umhüllung, eine Beschichtung oder einen Film um das fadenförmige Element.
Der Ausdruck "fadenförmiges Element" meint einen textilen Faden, Garn oder Kord als solchen, wie vorzugsweise einen Luftabführungsfaden, ohne elektrisch leitfähige Beschichtung.
Der Ausdruck "elektrisch leitfähiges, fadenförmiges Element" meint das fadenförmige Element samt seiner elektrisch leitfähigen Beschichtung.
Der Begriff "Kopfbereich" meint die Bauteile Laufstreifen, Gürtel und Gürtelbandage des Reifens und diejenigen Zwischenschichten, die zwischen diesen Bauteilen angeordnet sind.

Das fadenförmige, elektrisch leitfähige Element kann auf der äußeren Oberfläche oder auf der inneren Oberfläche oder sowohl auf der äußeren Oberfläche als auch auf der inneren Oberfläche der Karkasse, auch auf beiden Oberflächen alternierend, angeordnet sein.

"Äußere Oberfläche" meint die Oberfläche der Karkasse, die zur Seitenwand weist, während "innere Oberfläche" diejenige Fläche der Karkasse meint, die zur Innenschicht weist.

In einer vorteilhaften Weiterbildung der Erfindung ist zur Sicherstellung oder Verbesserung der elektrischen Leitfähigkeit vorgesehen, dass zwischen 1 und 20, vorzugsweise zwischen 2 und 6 elektrisch leitfähige, fadenförmige Elemente auf der/den Oberfläche/n der Karkasse, vorzugsweise regelmäßig über die Karkassbreite verteilt, auch alternierend auf äußerer und innerer Oberfläche, angeordnet sind.

In einer weiteren vorteilhaften Weiterbildung der Erfindung ist vorgesehen, dass das elektrisch leitfähige, fadenförmige Element im unvulkanisierten Reifen eine Dehnbarkeit von 1,5% bis 50%, vorzugsweise von 5% bis 25% aufweist. Das elektrisch leitfähige, fadenförmige Element erlaubt derart eine ausreichende Dehnung während der Reifenherstellung und im Betriebszustand und neigt nicht zum Bruch, was zu einer Unterbrechung des Leitweges führen würde.

In einer weiteren vorteilhaften Weiterbildung der Erfindung ist vorgesehen, dass der Durchmesser des fadenförmigen Elements zwischen 0,01 und 1,5mm, bevorzugt zwischen 0,05 und 0,5mm beträgt und sich somit vorteilhaft nicht von der Dimension der üblich eingesetzten Luftabführungsfäden unterscheidet und in ihren physikalischen Eigenschaften gleich sind.

In einer weiteren vorteilhaften Weiterbildung der Erfindung ist vorgesehen, dass das elektrisch leitfähige, fadenförmige Element (11) einen Titer < 3000dtex, vorzugsweise < 500dtex aufweist und sich somit vorteilhaft nicht von der Dimension der üblich eingesetzten Luftabführungsfäden unterscheidet.

In einer weiteren vorteilhaften Weiterbildung der Erfindung ist vorgesehen, dass die elektrisch leitfähige Beschichtung ein Haftvermittler, vorzugsweise ein RFL-dip, ist, der elektrisch leitfähige Partikel, vorzugsweise Ruß mit einer spezifischen Oberfläche ≥ 50 m²/g, wie beispielsweise Ruß vom Typ N339, besonders bevorzugt Ruß mit einer spezifischen Oberfläche ≥ 100 m²/g enthält. Dem Fachmann ist es bekannt, ein fadenförmiges Element zur guten Gummianbindung mit einem Haftvermittler zu beschichten. Wenn diesem Haftvermittler nun elektrisch leitfähige Partikel, vorzugsweise dispergiert, beigemengt werden, ist die elektrische Leitfähigkeit als auch die erwünschte Haftvermittlung als auch eine gute Haftung des Rußes am fadenförmigen Element gegeben. Ohne einen weiteren Arbeitsschritt zu benötigen, ist mit dem üblichen sog. "dip-Vorgang" des fadenförmigen Elementes, bei der dieses durch die dispergierte, elektrisch leitfähige Partikel aufweisende Haftvermittlerflüssigkeit gezogen wird, die elektrisch leitfähige und haftvermittelnde Beschichtung des fadenförmigen Elementes erhalten. Dieses ist kostengünstig und effizient.

Die Abkürzung "RFL" steht für Resorcin-Formaldehyd-Latex.
Unter dem Begriff "Haftvermittler" ist die um den Festigkeitsträger bzw. um dessen Bestandteile aufgebrachte haftvermittelnde Beschichtung zu verstehen.

Die nicht leitfähigen Materialien der luftabführenden, fadenförmigen Elemente können beispielsweise Polyester, Polyamid, Baumwolle oder Hybride der vorgenannten Materialien sein.

Das luftabführende, fadenförmige Element kann aus kontinuierlichen Filamenten, aus texturierten Filamenten oder aus Stapelfasern bestehen.

Vorteilhaft ist es, wenn die Beschichtung in Bezug zum blanken fadenförmigen Element zwischen 10 und 90 Gew%, bevorzugt zwischen 10 und 50 Gew%, besonders bevorzugt zwischen 15 und 35 Gew% des fadenförmigen Elements beträgt [DPU (dip pick up)]. Ein DPU zwischen 15 und 35 Gew% stellt bei einer vergleichsweise dünnen und somit kosteneffiziente Beschichtung, die in einem dip-Vorgang aufgebracht werden kann, eine ausreichende elektrische Leitfähigkeit sicher.

In einer bevorzugten Ausführungsform weist der Fahrzeugluftreifen einen Kopfbereich und Wulstbereiche aus elektrisch leitfähigen Kautschukmischungen auf, während die Kautschukmischung(en) der Karkasse und/oder des Seitenwandbereiches und/oder der Innenschicht unzureichend elektrisch leitend ist/sind. Trotz der Verwendung von rollwiderstandsoptimierten, "schlecht" elektrisch leitfähigen Kautschukmischungen im Seitenwandbereich und/oder in der Karkasse und/oder in der Innenschicht ist eine verbesserte elektrische Leitfähigkeit durch die elektrisch leitfähige Gestaltung weniger Luftabführungsfäden durch dessen elektrisch leitfähige Beschichtung erreicht. Hierdurch ist sichergestellt, dass die Ableitung der elektrostatischen Aufladung von der Felge über den Wulst über die elektrisch leitenden Elemente bis zum elektrisch leitenden Laufstreifen ausreichend erfolgt. Der Fahrzeugluftreifen ist dennoch von hoher Fertigungsqualität, da die während des Reifenbaus zwischen den Bauteilen eingeschlossene Luft weiterhin zuverlässig über die luftabführenden fadenförmigen Elemente abführbar ist. Aufwendige konstruktive Maßnahmen am Fahrzeugluftreifen sind nicht erforderlich.

Mit "unzureichend elektrisch leitfähigen Kautschukmischungen" sind Mischungen gemeint, mit denen der Reifen einen elektrischen elektrischen Widerstand von > 1 x 10⁸ Ohm aufweist.

Als leitfähigen Dip kann man quasi jede Kombination aus polymerbasiertem Latex und Ruß bzw. polymerhaltigem Lösemittel und Ruß verwenden, die nach Abtrocknen von Wasser bzw. Lösemittel auf dem nichtleitenden fadenförmigen Element als Träger einen leitfähigen Film bestehend aus Polymer und Ruß hinterlässt.

Bei der Herstellung eines elektrisch leitfähigen RFL-Dips geht man folgendermaßen vor:
- Herstellung/ Verwendung einer wässrigen Dispersion A von Ruß, welche 5 bis 25 Gew% Ruß, vorzugsweise 6 bis 15 Gew% Ruß, besonders bevorzugt 7 bis 10 Gew% Ruß aufweist;
- Zugabe und Mischung der wässrigen Dispersion A in eine Dispersion B, die ein RFL-dip ist.

Somit ist im getrockneten Zustand ein Rußanteil von 15 bis50 Gew%, bevorzugt ein Rußanteil von 20 bis 40 Gew% gewährleistet, um die erwünschte Leitfähigkeit zu erhalten.

Vorteilhafterweise mischt man die Dispersionen A und B in einem Volumen-Verhältnis zwischen 50 : 50 und 70 : 30, bevorzugt zwischen 50 : 50 und 60 : 40.

Als leitfähigen Dip kann man ebenfalls einen Ruß-Dip ohne RFL, bestehend beispielsweise aus Ruß, Wasser und Glykol, wie Colanyl black PR130 der Firma Clariant, verwenden.

Nach Durchziehen der fadenförmigen Elemente durch diesen, aus den zwei Dispersionen A+B hergestellten rußhaltigen RFL-Dip und nach anschießendem Abtrocknen des Dips, hat sich eine Beschichtung in Form eines elektrisch leitfähigen und haftvermittelnden Films um das fadenförmige Element gebildet. Die Verhältnisse der Dispersionen A und B sind dabei derart zu wählen, dass einerseits die Rußkonzentration im getrockneten Film hoch genug ist, um die vorgenannten Leitfähigkeitsanforderungen zu erfüllen, dass andererseits aber die fertige Dip-Lösung durch den hohen Rußanteil weder zu viskos noch schlecht beschichtend ist.

Die nachfolgende Tabelle zeigt elektrische Widerstände von elektrisch leitfähig beschichteten Luftabführungsfäden aus PET der Konstruktion 235 dtex x 1.

**Tabelle**

| **Material des Luftabführungsfadens** | **Solution 1 in Gew%** | **Solution 2 in Gew%** |
|---|---|---|
| | Colanyl black PR 130 (der Firma Clariant): 14,0 | Derussol 345 (der Firma Evonik) : 9,0 |
| | Wasser : 43 | Wasser : 45,5 |
| | RFL-dip : 43 | RFL-dip : 45,5 |
| **PET 235 x 1** | 3 x 10⁵ Ohm/cm | 2 x 10⁵ Ohm/cm |

Die Erfindung wird nun anhand von zwei Figuren, die schematische Ausführungsbeispiele darstellen, näher erläutert. Dabei zeigen die:
Fig.1 einen Teilschnitt durch einen Fahrzeugluftreifen;
Fig.2 einen Querschnitt durch ein elektrisch leitfähiges, fadenförmiges Element.

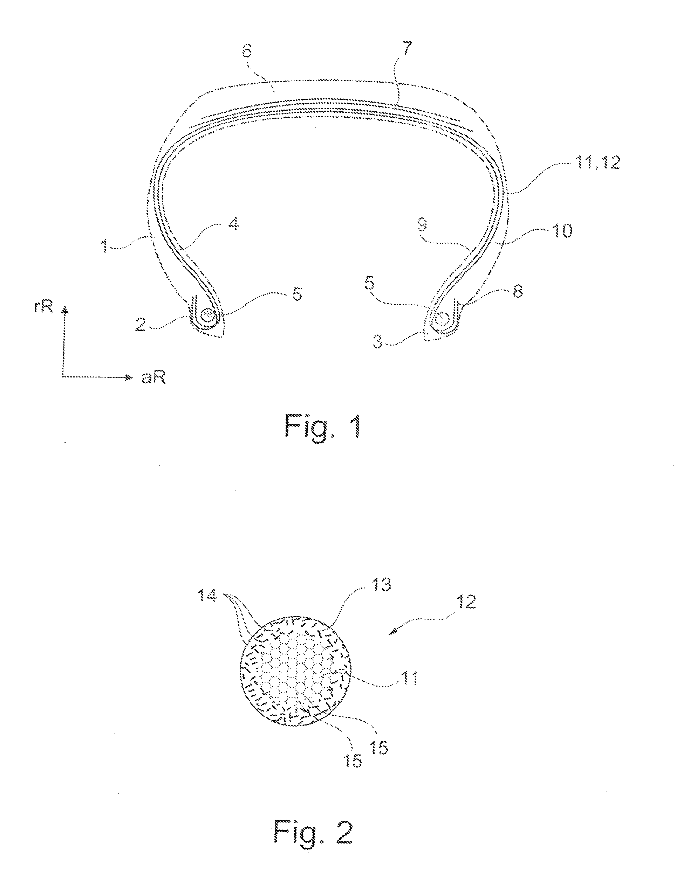

Die Figur 1 zeigt einen radialen Teilschnitt durch einen PKW-Fahrzeugluftreifen. Der aus Kautschukmischungen bestehende Fahrzeugluftreifen 1 hat eine sich von Wulstbereich 2 zu Wulstbereich 3 erstreckende Radialkarkasse 4, welche aus einer in Kautschuk eingebetteten Einlage aus Festigkeitsträgern besteht und um zugfeste Wulstkerne 5 von axial innen nach axial außen in einem Karkasshochschlag 8 endend herumgeführt ist. Der Fahrzugluftreifen 1 weist weiterhin einen Laufstreifen 6 und an die Karkasse 4 angrenzende Bauteile wie die Innenschicht 9 und die Seitenwand 10 auf Zwischen der Karkasse 4 und dem Laufstreifen ist der Gürtel 7 angeordnet. Die Innenschicht 9 grenzt an die innere Oberfläche der Karkasse 4, während die Seitenwand 10 an die äußere Oberfläche der Karkasse 4 angrenzt. Auf wenigstens einer der beiden Oberflächen der Karkasse 4 sind fadenförmige Elemente in Form von Luftabführungsfäden 11 aus Baumwolle oder PET der Konstruktion von 50 bis 500 dtex angeordnet, vergl. Fig.2. Die Luftabführungsfäden 11 dienen dazu, die während des Reifenaufbaus eingeschlossene Luft zwischen der Karkasse 4 und den angrenzenden Bauteilen Innenschicht und/ oder Seitenwand 9, 10 abzuführen.

Die Luftabführungsfäden 11 sind in einem Abstand von 25 bis 40 mm - in Umfangsrichtung gemessen - auf der Oberfläche der Karkasse 4 in radialer Orientierung angeordnet und weisen einen Durchmesser von < 0,3 mm, vorzugsweise von 0,05 bis 0,2 mm auf. Die Luftabführungsfäden 11 überspannen die volle Karkasslagenbreite.

Zwischen 2 und 6 Stück der Luftabführungsfäden 11 des Reifens sind als elektrisch leitfähige, fadenförmige Elemente 12 elektrisch leitfähig gestaltet, während die übrigen Luftabführungsfäden 11 wie bekannt gestaltet sind. Diese elektrisch leitfähig gestalteten Elemente 12 sind regelmäßig über den Umfang des Reifens verteilt auf der Karkasse 4 angeordnet. Das elektrisch leitfähige, fadenförmige Element 12 ist ein Luftabführungsfaden 11 mit einer elektrisch leitfähigen Beschichtung 13. Der Luftabführungsfaden ist ein Garn, bestehend aus Filamenten 15 und weist die Konstruktion 235 dtex x 1 auf Die Beschichtung beträgt in Bezug zum blanken fadenförmigen Element 11 zwischen 20 bis 40 Gew% des fadenförmigen Elements. Die elektrisch leitfähige Beschichtung ist ein RFL-dip (Resorcin-Formaldehyd-Latex-Dip) mit Rußen mit einer spezifischen Oberfläche ≥ 50 m²/g, welcher im getrockneten Zustand einen Rußanteil von 15 bis 50 Gew%, bevorzugt einen Rußanteil von 20 bis 40 Gew% aufweist. Dieser vorgenannte rußhaltige RFL-Dip stellt die elektrische Leitfähigkeit sicher und ermöglicht gleichzeitig eine gute Anbindung an Gummi und eine gute Haftung des Rußes am fadenförmigen Element. Der beschichtete Luftabführungsfaden 12 sowie die Luftabführungsfäden 11 sind über die gesamte axiale Breite der Karkasse 4 angeordnet.

### Bezugszeichenliste

### (ist Teil der Beschreibung)

- 1: Fahrzeugluftreifen
- 2: Wulstbereich
- 3: Wulstbereich
- 4: Karkasse
- 5: Wulstkern
- 6: Laufstreifen
- 7: Gürtel
- 8: Karkasshochschlag
- 9: Innenschicht
- 10: Seitenwand
- 11: Luftabführungsfaden (fadenförmiges Element)
- 12: Beschichteter Luftabführungsfaden (elektrisch leitfähiges, fadenförmiges Element)
- 13: elektrisch leitfähige Beschichtung
- 14: elektrisch leitfähiger Partikel
- 15: Filament

- aR: axiale Richtung
- rR: radiale Richtung

## Patentansprüche

1. Fahrzeugluftreifen (1) in Radialbauart mit einer Karkasse (4) und mit an die Karkasse (4) angrenzenden Bauteilen (9, 10), wobei auf wenigstens einer der beiden Oberflächen der Karkasse (4) fadenförmige Elemente (11) angeordnet sind, die vorzugsweise während des Reifenaufbaus einer Luftabführung von eingeschlossener Luft zwischen der Karkasse (4) und den angrenzenden Bauteilen (9, 10) dienen,
wobei, wenigstens ein fadenförmiges Element (11) eine Beschichtung (13) aufweist, welche elektrisch leitfähig ist und gemeinsam ein elektrisch leitfähiges, fadenförmiges Element (12) bilden und das elektrisch leitfähige, fadenförmige Element (12) einen elektrischen Widerstand von < 1 x 10⁷ Ohm/cm aufweist, **dadurch gekennzeichnet, dass** das fadenförmige Element (11) nicht elektrisch leitfähig ist.

2. Fahrzeugluftreifen nach Anspruch 1,
**dadurch gekennzeichnet, dass** zwischen einem und 20, vorzugsweise zwischen zwei und 6 elektrisch leitfähige, fadenförmige Elemente (12) auf der/den Oberfläche/n der Karkasse (4) angeordnet sind.

3. Fahrzeugluftreifen nach Anspruch 1 oder 2,
**dadurch gekennzeichnet, dass** das elektrisch leitfähige, fadenförmige Element (12) im unvulkanisierten Reifen eine Dehnbarkeit von 1,5% bis 50%, vorzugsweise von 5% bis 25% aufweist.

4. Fahrzeugluftreifen nach einem oder mehreren der vorangehenden Ansprüche,
**dadurch gekennzeichnet, dass** der Durchmesser des fadenförmigen Elements (11) zwischen 0,01 und 1,5mm, vorzugsweise zwischen 0,05 und 0,2mm beträgt.

5. Fahrzeugluftreifen nach einem oder mehreren der vorhergehenden Ansprüche,
**dadurch gekennzeichnet, dass** das elektrisch leitfähige, fadenförmige Element (11) einen Titer < 3000dtex, vorzugsweise < 500dtex aufweist.

6. Fahrzeugluftreifen nach einem oder mehreren der vorhergehenden Ansprüche,
**dadurch gekennzeichnet, dass** die elektrisch leitfähige Beschichtung (13) ein Haftvermittler, vorzugsweise RFL-dip ist, der elektrisch leitfähige Partikel (14), vorzugsweise Ruß mit einer spezifischen Oberfläche ≥ 50 m²/g, besonders bevorzugt mit einer spezifischen Oberfläche ≥ 100 m²/g, enthält.

7. Fahrzeugluftreifen nach Anspruch 6,
**dadurch gekennzeichnet, dass** die elektrisch leitfähige Beschichtung (13) ein Ruß-Dip ist.

8. Fahrzeugluftreifen nach einem oder mehreren der vorangehenden Ansprüche, **dadurch gekennzeichnet, dass** die elektrisch leitfähige Beschichtung (13) in Bezug zum fadenförmigen Element (11) zwischen 10 und 90 Gew%, vorzugsweise zwischen 10 und 50 Gew%, besonders bevorzugt zwischen 15 und 35 Gew% beträgt.

9. Fahrzeugluftreifen nach einem oder mehreren der Ansprüche 1-8,
**dadurch gekennzeichnet, dass** die Kautschukmischungen des Kopfbereich (6) und der Wulstbereiche (2, 3) des Fahrzeugluftreifens (1) elektrisch leitfähige Kautschukmischungen aufweisen, während die Kautschukmischung(en) der Karkasse (4) und/oder des Seitenwandbereichs (10) und/oder der Innenschicht (9) unzureichend elektrisch leitfähig ist/sind.

10. Verfahren zur Herstellung eines elektrisch leitfähigen RFL-Dips, welcher in einem Fahrzeugluftreifen nach Anspruch 6 einsetzbar ist, mit den folgenden Schritten:
- Herstellung einer wässrigen Dispersion A von Ruß, welche 5 bis 25 Gew% Ruß, vorzugsweise 6 bis 15 Gew% Ruß, besonders bevorzugt 7 bis 10 Gew% Ruß aufweist;
- Zugabe und Mischung der wässrigen Dispersion A in eine Dispersion B, die ein RFL-dip ist.

11. Verfahren nach Anspruch 10,
**dadurch gekennzeichnet, dass** man die Dispersionen A und B in einem Volumen-Verhältnis zwischen 50 : 50 und 70 : 30, bevorzugt zwischen 50 : 50 und 60 : 40 mischt.

## Claims

1. Pneumatic vehicle tire (1) in radial construction having a carcass (4) and having components (9, 10) adjoining the carcass (4), thread-shaped elements (11) being arranged on at least one of the two surfaces of the carcass (4), which are preferably used for air discharge of enclosed air between the carcass (4) and the adjoining components (9, 10) during the tire construction,
at least one thread-shaped element (11) having a coating (13), which is electrically conductive, and jointly form an electrically conductive, thread-shaped element (12), and the electrically conductive, thread-shaped element (12) has an electrical resistance of < 1 x 10⁷ ohm/cm, **characterized in that** the thread-shaped element (11) is not electrically conductive.

2. Pneumatic vehicle tire according to Claim 1, **characterized in that** between one and 20, preferably between two and 6 electrically conductive, thread-shaped elements (12) are arranged on the surface(s) of the carcass (4).

3. Pneumatic vehicle tire according to claim 1 or 2, **characterized in that** the electrically conductive, thread-shaped element (12) in the unvulcanized tire has an extensibility of 1.5% to 50%, preferably 5% to 25%.

4. Pneumatic vehicle tire according to one or more of the preceding claims, **characterized in that** the diameter of the thread-shaped element (11) is between 0.01 and 1.5 mm, preferably between 0.05 and 0.2 mm.

5. Pneumatic vehicle tire according to one or more of the preceding claims, **characterized in that** the electrically conductive, thread-shaped element (11) has a titer < 3000 dtex, preferably < 500 dtex.

6. Pneumatic vehicle tire according to one or more of the preceding claims, **characterized in that** the electrically conductive coating (13) is an adhesion promoter, preferably an RFL dip, which contains electrically conductive particles (14), preferably carbon black having a specific surface area ≥ 50 m²/g, particularly preferably having a specific surface area ≥ 100 m²/g.

7. Pneumatic vehicle tire according to Claim 6, **characterized in that** the electrically conductive coating (13) is a carbon black dip.

8. Pneumatic vehicle tire according to one or more of the preceding claims, **characterized in that** the electrically conductive coating (13), in relation to the thread-shaped element (11), makes up between 10 and 90 wt%, preferably between 10 and 50 wt%, particularly preferably between 15 and 35 wt%.

9. Pneumatic vehicle tire according to one or more of Claims 1-8,
**characterized in that** the rubber mixtures of the head region (6) and the bead regions (2, 3) of the pneumatic vehicle tire (1) have electrically conductive rubber mixtures, while the rubber mixture (s) of the carcass (4) and/or of the side wall region (10) and/or of the inner layer (9) is/are inadequately electrically conductive.

10. Method for producing an electrically conductive RFL dip which can be used in a pneumatic vehicle tire according to Claim 6 having the following steps:
- producing an aqueous dispersion A of carbon black, which has 5 to 25 wt% carbon black, preferably 6 to 15 wt% carbon black, particularly preferably 7 to 10 wt% carbon black;
- adding and mixing the aqueous dispersion A in a dispersion B, which is an RFL dip.

11. Method according to Claim 10,
**characterized in that** the dispersions A and B are mixed in a volume ratio between 50:50 and 70:30, preferably between 50:50 and 60:40.

## Revendications

1. Bandage pneumatique (1) pour roue de véhicule, à structure radiale, présentant une carcasse (4) et des composants (9, 10) adjacents à la carcasse (4), des éléments (11) en forme de fil qui servent de préférence pendant la fabrication du bandage de roue à évacuer l'air inclu entre la carcasse (4) et les composants (9, 10) adjacents étant disposés sur au moins l'une des deux surfaces de la carcasse (4),
au moins un élément (11) en forme de fil présentant un revêtement (13) qui est électriquement conducteur, l'ensemble formant un élément électriquement conducteur (12) en forme de fil, l'élément électriquement conducteur (12) en forme de fil présentant une résistance électrique < 1 x 10⁷ Ohm/cm,
**caractérisé en ce que**
l'élément (11) en forme de fil n'est pas électriquement conducteur.

2. Bandage pneumatique pour roue de véhicule selon la revendication 1, **caractérisé en ce qu'**entre un et 20 et de préférence entre deux et 6 éléments électriquement conducteurs (12) en forme de fil sont disposés sur la ou les surfaces de la carcasse (4).

3. Bandage pneumatique pour roue de véhicule selon les revendications 1 ou 2, **caractérisé en ce que** l'élément électriquement conducteur (12) en forme de fil présente dans le bandage de roue non vulcanisé une capacité de dilatation de 1,5 % à 50 % et de préférence de 5 % à 25 %.

4. Bandage pneumatique pour roue de véhicule selon l'une ou plusieurs des revendications précédentes, **caractérisé en ce que** le diamètre de l'élément (11) en forme de fil est compris entre 0,01 et 1,5 mm et de préférence entre 0,05 et 0,2 mm.

5. Bandage pneumatique pour roue de véhicule selon l'une ou plusieurs des revendications précédentes, **caractérisé en ce que** l'élément électriquement conducteur (11) en forme de fil présente un titre < 3000 dtex et de préférence < 500 dtex.

6. Bandage pneumatique pour roue de véhicule selon l'une ou plusieurs des revendications précédentes, **caractérisé en ce que** le revêtement électriquement conducteur (13) est un agent de renforcement de l'adhérence, de préférence un "dip" RFL qui contient des particules électriquement conductrices (14), de préférence du noir de carbone, dont la surface spécifique est ≥ 50 m²/g et de façon particulièrement préférable dont la surface spécifique est ≥ 100 m²/g.

7. Bandage pneumatique pour roue de véhicule selon la revendication 6, **caractérisé en ce que** le revêtement électriquement conducteur (13) est un "dip" de noir de carbone.

8. Bandage pneumatique pour roue de véhicule selon l'une ou plusieurs des revendications précédentes, **caractérisé en ce que** le revêtement électriquement conducteur (13) représente par rapport à l'élément (11) en forme de fil entre 10 et 90 % en poids, de préférence entre 10 et 50 % en poids et de façon particulièrement préférable entre 15 et 35 % en poids.

9. Bandage pneumatique pour roue de véhicule selon l'une ou plusieurs des revendications 1 à 8, **caractérisé en ce que** les mélanges de caoutchouc de la partie de tête (6) et des parties de bourrelet (2, 3) du bandage pneumatique (1) pour roue de véhicule présentent des mélanges de caoutchouc électriquement conducteurs, le ou les mélanges de caoutchouc de la carcasse (4) et/ou de la partie (10) de paroi latérale et/ou de la couche intérieure (9) n'étant pas suffisamment électriquement conducteurs.

10. Procédé de fabrication d'un "dip" RFL électriquement conducteur apte à être utilisé dans un bandage pneumatique pour roue de véhicule selon la revendication 6, le procédé présentant les étapes suivantes :
formation d'une dispersion aqueuse A de noir de carbone qui présente de 5 à 25 % en poids de noir de carbone, de préférence 6 à 15 % en poids de noir de carbone et de façon particulièrement préférable 7 à 10 % en poids de noir de carbone,
addition et mélange de la dispersion aqueuse A dans une dispersion B qui est un "dip" RFL.

11. Procédé selon la revendication 10, **caractérisé en ce que** les dispersions A et B sont mélangées dans un rapport volumique compris entre 50:50 et 70:30 et de préférence entre 50:50 et 60:40.
